# EUROPÄISCHE PATENTSCHRIFT

(11) **EP 2 025 471 B1**
(45) Veröffentlichungstag und Bekanntmachung des Hinweises auf die Patenterteilung: **10.10.2012**
(21) Anmeldenummer: 08013896.9
(22) Anmeldetag: 04.08.2008
(51) Int. Cl.: B25B 5/08, B25B 5/16

(54) **Niederzugspanner**
Pull-down tensioning device
Crampon plaqueur

(30) Priorität: 17.08.2007 DE 102007039032
(43) Veröffentlichungstag der Anmeldung: 18.02.2009
(73) Patentinhaber: Andreas Maier GmbH & Co. KG, 70734 Fellbach (DE)
(72) Erfinder: Cianci, Pasquale, 73252 Lenningen (DE)
(74) Vertreter: Hoeger, Stellrecht & Partner Patentanwälte

(56) Entgegenhaltungen:
- EP-A- 1 600 261
- DE-U1- 20 102 698

## Beschreibung

In der DE 10 2004 026 187 A1 ist eine Spanneinrichtung beschrieben, die dazu eingerichtet ist, Werkstücke auf einem Maschinentisch festzuspannen. Die Spanneinrichtung weist zwei in einem Gehäuse geführte Spannbacken auf, die zapfenartig aus der Spanneinrichtung vorstehen. Sie bilden gemeinsam einen Zapfen, der dazu vorgesehen ist, in eine Spannbohrung eines Werkstücks einzudringen. Zu diesem Zweck sind die Spannbacken so gestaltet, dass sie teilzylindrische Werkzeugspannflächen bilden, die sich angenähert zu einer Zylinderfläche ergänzen. Auf ihren einander gegenüberliegenden Seiten sind die beiden Spannbacken mit ebenen Schrägflächen versehen, die, ausgehend vom freien Ende der Spannbacken, in Richtung auf das Gehäuse der Spanneinrichtung zu konvergieren. Sie bilden so einen in Richtung auf das Gehäuse zeigenden keilförmigen Raum.

Um die Spannbacken zu spreizen, damit sie mit Kraft gegen die Spannbohrung des Werkstücks anliegen, ist ein Zugbolzen vorgesehen, der an seinem oberen den Spannbacken benachbarten Ende einen auf der Spitze stehenden Keil als Kopf trägt.

Bei der Verwendung der bekannten Spanneinrichtung wird zunächst der Spannbolzen maximal vorgeschoben, damit die beiden Spannbacken unter der Wirkung von O-Ringen, die als Rückstellglieder dienen, ihren kleinsten effektiven Durchmesser einnehmen können. Nach dem Aufstecken des Werkstücks auf die Spannbacken der Spanneinrichtung wird mit Hilfe eines Hydraulikkolbens der Spannbolzen niedergezogen und damit der am Kopfende des Spannbolzens vorhandene Keil tiefer zwischen die beiden Spannbacken niedergezogen. Hierdurch werden einerseits die Spannbacken gespreizt und legen sich mit Kraft gegen die Bohrungswand des Werkstücks an und ziehen gleichzeitig das Werkstück auf die Auflagefläche des Maschinentisches nieder. Die Niederzugskraft ist gleich derjenigen Kraft, die der Kolben unmittelbar erzeugen kann.

Diese in der Praxis durchaus bewährte Lösung ist hinsichtlich der Niederzugskraft begrenzt. Die Begrenzung ergibt sich aufgrund der Einschnürungsstelle, wo der auf der Spitze stehende Keil in den Spannbolzen übergeht. Diese Fläche ist vergleichsweise extrem klein, da sie unmittelbar den kleinsten zulässigen Durchmesser der Spannbohrung im Werkstück definiert.

Ein derartiges Gerät ist aus der DE 201 02 698 U1 bekannt.

Eine Erhöhung der Niederzugskraft ist mit der bekannten Spanneinrichtung nicht möglich.

Ausgehend hiervon ist es Aufgabe der Erfindung einen neuen Niederzugspanner zu schaffen, mit dem größere Niederzugskräfte erzeugt werden können.

Diese Aufgabe wird erfindungsgemäß mit einer Spanneinrichtung mit den Merkmalen des Anspruches 1 gelöst.

Die neue Spanneinrichtung zum Aufspannen von Werkstücken weist ein Gehäuse auf, das eine Stufenbohrung enthält. Die Stufenbohrung bildet wenigstens zwei in axialer Richtung hintereinander liegende Abschnitte, die an einer nach innen ragenden Schulterfläche ineinander übergehen. Auf der Außenseite des Gehäuses befindet sich neben der Stufenöffnung eine Werkstückauflagefläche, gegen die im gespannten Zustand das Werkstück anliegt.

Die Schulterfläche an der die beiden Öffnungsabschnitte ineinander übergehen, ist schräg ausgerichtet derart, dass ihr radial innen liegender Rand näher bei der Werkstückauflagefläche liegt als der radial außen liegende Rand, der in den Abschnitt mit dem größeren Durchmesser übergeht.

In der Stufenbohrung sitzen wenigstens zwei Spannbacken, die durch den Abschnitt mit der geringeren Weite nach außen ragen und über die Ebene, die durch die Werkstückauflagefläche definiert ist, überstehen.

Jede der beiden Spannbacken weist eine der Achse der Stufenöffnung zugekehrte Antriebsfläche auf und ist an demjenigen Ende, das über die Werkstückauflagefläche nicht übersteht, mit einem radial weg stehenden Flansch versehen, der dazu eingerichtet ist, gegen die Schulterfläche anzuliegen. Auch dieser Flansch weist eine Schrägfläche auf, die zumindest angenähert dem Schrägungswinkel der Schulterfläche entspricht, so dass eine Anlagefläche entsteht, die möglichst groß ist, jedoch nicht vollflächig zu sein braucht. Die nach außen weg stehende Seiten der Spannbacken sind Spannflächen, die dazu vorgesehen sind, mit dem Werkstück in Eingriff zu kommen.

Es ist ferner ein Spreizdorn vorgesehen, der einen Kopf trägt, der sich zum seinem freien Ende hin verjüngt. Beispiele für solche konvergierenden Köpfe sind Pyramiden, Kegelstümpfe, Pyramidenstümpfe, Keile oder Keilstümpfe.

Beim Einsatz des neuen Niederzugspanners wird die Niederzugkraft erzeugt, indem der Spreizdorn mit seinem Kopf in Richtung auf die Spannbacken vorgeschoben wird. Die am Kopf vorgesehenen schrägen Antriebsflächen drücken die Spannbacken radial auseinander und gegen die Schulterfläche an der Stufenbohrung. Aufgrund der Ausrichtung Schulter in der Stufenbohrung werden die radial nach außen weichenden Spannbacken über ihre Flansche gleichzeitig in Richtung auf den Spreizdorn niedergezogen.

Da der Spreizdorn so gestaltet ist, dass er keine Einschnürungsstelle aufweist, können sehr große Druckkräfte erzeugt werden, mit deren Hilfe die Backen im Werkstück gespreizt werden. Gleichzeitig können über die schrägen Flansche und die schrägen Schulterflächen große Niederzugkräfte hervorgerufen werden. Die Größe der Niederzugkraft ist im Verhältnis zur Spannkraft frei wählbar. Durch Variationen des Schrägungswinkels an der Schulterfläche können bei gleicher radialer Spannkraft unterschiedlich große Niederzugkräfte erzeugt werden. Je flacher der Schrägungswinkel ist, umso großer werden bei gegebener Spreizkraft die Niederzugkräfte. Welche Kombination optimal ist, kann leicht empirisch ermittelt werden und richtet sich vor allen Dingen nach dem Material des aufzuspannenden Werkstücks.

Da große Niederzugkräfte erzeugt werden können, besteht die Möglichkeit, eine Betätigungseinrichtung zu verwenden, die auf Druckluft basiert. Der Vorteil einer solchen Spanneinrichtung besteht in der Ungefährlichkeit von Leckagen, da Druckluft ohne weiteres rückstandsfrei entweichen kann und keine Oberflächen verschmutzt.

Das Gehäuse der neuen Spanneinrichtung kann von einem Maschinentisch oder einem Werkstückaufspanntisch gebildet sein.

Die Stufenöffnung kann eine rotationssymmetrische Stufenbohrung sein, bei der der Abschnitt mit dem größeren Durchmesser auch gleichzeitig abschnittsweise eine Zylinderbohrung darstellen kann. Ferner kann noch eine dritte Stufe an der Stufenbohrung ausgebildet sein mit noch größerem Durchmesser. Diese dritte Stufe kann als Zylinderbohrung verwendet werden.

Die Stufenöffnung kann auch in Form rechteckigen Taschen/Ausnehmungen und Öffnungen ausgeführt sein, wenn die Spannbacken über alles gesehen eher auf der Quaderform basieren.

Der Abschnitt mit der kleineren Weite bzw. dem kleineren Durchmesser kann einen Durchmesser von wenigstens 5 mm aufweisen.

Die Schulterfläche, an der die beiden Abschnitte der Stufenöffnung ineinander übergehen, kann eine rotationssymmetrische Fläche sein oder sie kann sich aus zwei Rechteckflächen zusammensetzen, die ähnlich einem Satteldach verlaufen, wobei die gedachte Firstlinie in Richtung auf die Spannbacken zeigt. In diesem Falle sind die Querschnitte der Abschnitte in der Stufenöffnung beispielsweise quadratisch oder rechteckig.

Der Winkel, den die Schulterfläche mit der Längsachse der Stufenöffnung einschließt, kann zwischen 45° und 85° liegen, vorzugsweise zwischen 60° und 70°.

Wenn die Spanneinrichtung lediglich zwei Spannbacken aufweist, können sie, wenn deren Antriebsflächen ebene Flächen sind, geringfügig wandern, um sich an die Lage der Spannbohrung im Werkstück anzupassen. Es können aber auch ohne weiteres mehr als zwei Spannbacken, beispielsweise 3 oder 4 Spannbacken, verwendet werden. Bei noch größeren Öffnungen kann die Zahl der Spannbacken weiter erhöht werden, um in der Bohrung des Werkstücks möglichst viele Anlagepunkte zu schaffen.

Die Spannbacken können zylindrisch gekrümmte Werkstückanlageflächen aufweisen, die radial nach außen zeigen. Sie können aber auch ebene Werkstückanlageflächen aufweisen, was vorteilhaft ist, wenn das Werkstück beispielsweise ein Langloch enthält und die Spannung an diesem Langloch erfolgen soll.

Die Spannfläche steht vorteilhafterweise auf der durch den Werkstückanschlag definierten Ebene senkrecht.

Die Spannfläche kann profiliert sein. Sie kann beispielsweise in Umfangsrichtung verlaufende Rippen tragen. Die Rippen können in einer scharfkantigen Schneide auslaufen, die radial am weitesten außen liegt.

Je nach zu spannendem Werkstück kann die Werkstückauflagefläche eine Ebene definieren, die rechtwinklig zu der Längsachse der Stufenöffnung verläuft. Die Werkstückauflagefläche kann um die Stufenöffnung herum verteilt angeordnet sein, oder sich lediglich neben einer Seite befinden.

Das Gehäuse kann, wenn die Spanneinrichtung ein selbstständiges Bauteil ist, das auf dem Maschinentisch befestigt wird, ein im Wesentlichen zylindrisches Gehäuse mit einem Befestigungsflansch sein. Der Befestigungsflansch kann in der Nähe der Werkstückauflagefläche oder am gegenüberliegenden Ende des Gehäuses vorgehen sein.

Die Spannbacken können als gesinterte Teile hergestellt sein. Hierdurch wird es möglich, sehr kleine Spannbacken zu erzeugen, die sehr hart sind.

Die Antriebsflächen an den Spannbacken können ebene Flächen sein, Ausschnitte aus Kegelstumpfflächen oder Ausschnitte aus Pyramidenstumpfflächen.

Bei rotationssymmetrischen Anlageflächen an den Flanschen gibt es vorzugsweise eine Stellung, in der die Flansche vollflächig an der Schulterfläche der Stufenöffnung anliegen.

Die Anzahl der an dem Kopf des Spreizdorns ausgebildeten Antriebsflächen stimmen mit der Anzahl der Spannbacken zweckmäßigerweise überein.

Der Winkel den die Antriebsfläche des Kopfes des Spreizdorns mit der Längsachse der Stufenöffnung einschließt, kann zwischen 5° und 30°, vorzugsweise zwischen 8° und 15° liegen.

Der Spreizdorn kann mit einem in dem Fluidzylinder verschieblichen Kolben zusammenwirken oder diesen Kolben selbst bilden.

Eine weitere Möglichkeit den Spreizdorn zu betätigen besteht in der Verwendung eines Schraubspindelantriebs.

Der Fluidzylinder kann, wie oben erwähnt, ein Druckluftzylinder sein oder ein Hydraulikzylinder. Er kann einseitig oder zweiseitig wirken ausgebildet sein.

Die Verwendung der Spanneinrichtung wird besonders einfach, wenn die Spannbacken mit einer elastischen Rückholeinrichtung versehen sind.

Die Rückholeinrichtung kann von wenigstens einem O-Ring gebildet sein, der um sämtliche Spannbacken außen herum liegt. Gleichzeitig kann dieser O-Ring auch dafür sorgen, dass eine Abdichtung zustande kommt.

Wenn als Betätigungsmedium Druckluft verwendet wird, besteht die Möglichkeit, einen Teil der Druckluft über eine gezielte Leckage zwischen den Spannbacken hindurch zu leiten um zu verhindern, dass sich im Spalt zwischen den Spannbacken Späne festsetzen können, die das Rückkehren der Spannbacken in die Ausgangsstellung blockieren.

Im Übrigen sind Weiterbildungen der Erfindung Gegenstand von Unteransprüchen.

Die nachfolgende Figurenbeschreibung erläutert Aspekte zum Verständnis der Erfindung. Weitere nicht beschriebene Details kann der Fachmann in der gewohnten Weise den Zeichnungen entnehmen, die insoweit die Figurenbeschreibung ergänzen. Es ist klar dass eine Reihe von Abwandlungen möglich sind.

Die nachfolgenden Zeichnungen sind nicht unbedingt maßstäblich. Zur Veranschaulichung von Details können möglicherweise bestimmte Bereiche übertrieben groß dargestellt sein. Darüber hinaus sind die Zeichnungen plakativ vereinfacht und enthalten nicht jedes bei der praktischen Ausführung gegebenenfalls vorhandene Detail. Die Begriffe "oben" und "unten" beziehen sich auf eine normale Einbaulage auf einem ebenen, nach oben zeigenden Maschinentisch.

In der Zeichnung sind Ausführungsbeispiele des Gegenstandes der Erfindung dargestellt.
- Fig. 1: zeigt den erfindungsgemäßen Niederzugspanner in einer Schnittdarstellung parallel zu der Längsachse des Spannbolzens.
- Fig. 2: veranschaulicht in einer perspektivischen Darstel- lung das Zusammenwirken zwischen den Spannbacken und dem Kopf des Spannbolzens in einer Ausschnitts- darstellung.
- Fig. 3: zeigt eine Ausgestaltung der Spannbacken als T-Nu- tenstein.

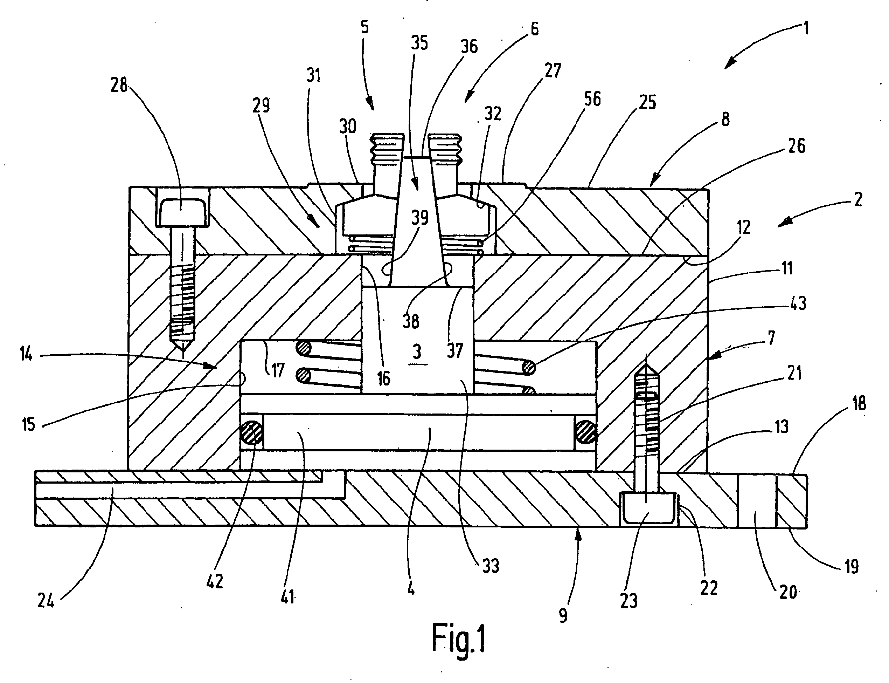

Fig. 1 zeigt in einer Schnittdarstellung einen Niederzugspanner 1. Zu dem Niederzugspanner 1 gehören ein Gehäuse 2, ein Spannbolzen 3, ein Kolben 4 sowie zwei Spannbacken 5 und 6.

Das Gehäuse 2 setzt sich aus einem Grundkörper 7, einer Deckelplatte 8 und einer Bodenplatte 9 zusammen. Der Grundköper 7 ist ein zylindrisches Gebilde mit einer zylindrischen Außenumfangsfläche 11, einer ebenen Oberseite 12 sowie einer ebenen Unterseite 13. Durch den Grundkörper 7 führt eine Stufenbohrung 14 hindurch, die sich aus einem ersten zylindrischen Abschnitt 15 und einem zweiten zylindrischen Abschnitt 16 zusammensetzt. Beide Abschnitte 15, 16 gehen an einer ebenen Schulter 17 ineinander über. Der Abschnitt 16 mündet, wie gezeigt, in die Oberseite 12, während der Abschnitt 15 in die Unterseite 13 einmündet. Die Stufenbohrung 14 ist koaxial zu der Außenumfangsfläche 11.

Die Bodenplatte 13 hat eine kreisscheibenförmige Gestalt mit einer planen Oberseite 18 und einer ebenfalls planen Unterseite 19. Mit der Oberseite 18 liegt die Bodenplatte 9 an der Unterseite 13 des Gehäusegrundkörpers 7 auf. Die Bodenplatte 9 steht, wie ersichtlich, über den Grundkörper 7 über und lässt einen Flansch entsteht, in dem Befestigungsbohrungen 20 untergebracht werden können um den Niederzugspanner 1 auf einem Maschinentisch zu befestigen. Alternativ können auch Durchgangsbohrungen durch das Gehäuse 2 vorgesehen werden.

Äquidistant um die Stufenbohrung 14 herum verteilte Gewindebohrungen 21 in dem Grundkörper 7 mit dazu fluchtenden Stufenbohrungen 22 in der Bodenplatte 9 dienen der Aufnahme von Befestigungsschrauben 23, mit denen die Bodenplatte 9 gegen die Unterseite 13 des Grundkörpers 7 festgeschraubt wird.

Radial und axial führt ein Kanal 24 von der Umfangsfläche der Bodenplatte 9 hinein. Die Bohrung 24 mündet axial in den Abschnitt 15 der Stufenbohrung 14.

Die Bodenplatte 9 dient gleichzeitig als bodenseitig abgedichteter Verschluss für den Bohrungsabschnitt 15, der in seinem unteren Bereich als Zylinderraum dient. Die zum Abdichten erforderlichen Dichtungen sind der Einfachheit halber nicht dargestellt. Dem Fachmann ist klar, wie eine solche Abdichtung erfolgt.

Die Deckelplatte 8 weist einen Außendurchmesser auf, der dem Außendurchmesser des Gehäusegrundkörpers 7 entspricht. Die Deckelplatte 8 bildet eine Oberseite 25 sowie eine plane Unterseite 26, die auf der ebenfalls planen Oberseite 12 des Gehäusegrundkörpers 7 ganzflächig aufliegt.

Aus der Oberseite 25 steht eine kreisringförmige Werkstückauflagefläche 27 ein geringes Stück vor.

Die Deckelplatte 8 ist mit einer Anzahl Schrauben 28 an dem Grundkörper 7 in ähnlicher Weise befestigt, wie die Bodenplatte 9. Die Köpfe der Schrauben 28 sind, wie gezeigt, versenkt.

Konzentrisch durch die Deckelplatte 8 führt eine weitere Stufenbohrung 29, die zu der Stufenbohrung 14 koaxial ist. Die Stufenbohrung 29 setzt sich aus einem Abschnitt 30 und einem Abschnitt 31 zusammen. Den Übergang zwischen den beiden Abschnitten 30, 31 bildet eine Schulter 32.

Der Durchmesser des Abschnittes 31 ist größer als der Durchmesser des Abschnittes 16 der Stufenbohrung 14 in dem Grundkörper 7.

Die Schulter 32, die die beiden Abschnitte 30 und 31 miteinander verbindet, ist eine Kegelstumpffläche, die so ausgerichtet ist, dass die gedachte Spitze des durch die Kegelstumpffläche definierten Kegels, bezogen auf Fig. 1 nach oben und damit von der Werkstückauflagefläche 27 weg zeigt.

Der Spanndorn 3 weist einen mittleren zylindrischen Abschnitt 33 auf, der an seinem unteren Ende in den scheibenförmigen Kolben 4 übergeht. Am oberen Ende endet der Spanndorn 3 in einem Kopf 35, der die Gestalt eines nach oben zeigenden Keils hat, der an einer ebenen Fläche 36 endet. Das breite Ende des Kopfes 35 geht einstückig in eine ebene Stirnfläche 37 des mittleren Abschnitts 33 über.

Zufolge der keilförmigen Kopfform entstehen zwei gegeneinander geneigte ebene Antriebsflächen 38 und 39.

Der Spanndorn 3 ist mit seinem mittleren Abschnitt 33 in dem Bohrungsabschnitt 16 geführt. In der Ruhestellung steht die nach oben zeigende Schulter 37 im Abstand zu der Oberseite 12 des Grundkörpers 7. Der keilförmige Kopf 35 ragt durch die Stufenbohrung 29 koaxial hindurch. Seine Stirnseite 36 befindet sich oberhalb der Werkstückauflagefläche 27, die, wie erwähnt, als ebene Ringfläche koaxial den Bohrungsabschnitt 30 umgibt. Der Kolben 4 hingegen gleitet mit geringem Spiel in den Bohrungsabschnitt 15.

Zum Abdichten ist der Kolben 4 mit einer Ringnut 41 versehen, in der ein O-Ring 42 liegt, der den Kolben 4 gegen die Wand des Bohrungsabschnitts 15 abdichtet.

Schließlich ist noch eine Vorspannfeder 43 vorgesehen, die sich gegen die Schulterfläche 17 abstützt und andererseits gegen die Oberseite des Kolbens 4 wirkt, um diesen in die untere Endlage vorzuspannen, in der er an der Bodenplatte 9 anliegt.

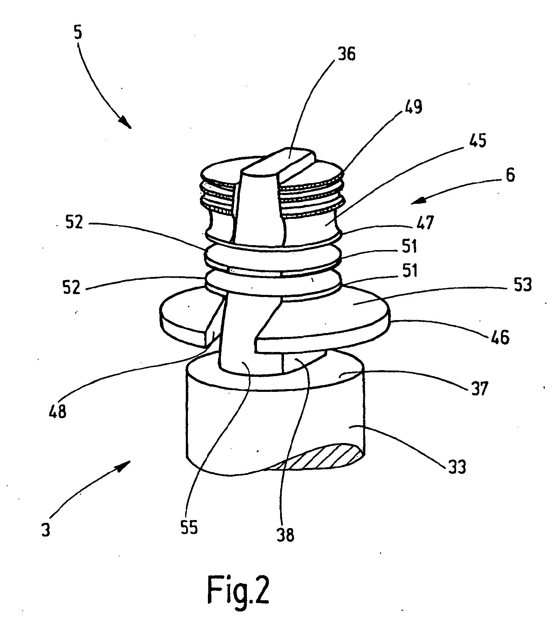

Zur Erläuterung der Spannbacken wird zusätzlich auf Fig. 2 Bezug genommen. Die Spannbacken 5, 6 sind identisch, so dass es genügt, lediglich eine der Spannbacken im Detail zu erläutern. Die Beschreibung gilt in der gleichen Weise für die jeweils andere Spannbacke. Die Bezugszeichen werden wechselweise an den beiden Spannbacken 5, 6 verwendet, je nachdem, ob wegen der Darstellung das betreffende Bauteil sichtbar ist.

Die Spannbacke 5, 6 weist einen in grober Annäherung zylindersegmentförmigen Grundkörper 45 auf, der an seinem unteren Ende einen Flansch 46 übergeht. Zur Außenseite hin wird der Grundkörper 45 von einer profilierten Zylinderfläche 47 begrenzt, während die gegenüber liegende Seite eine ebene Fläche 48 ist, die gegenüber der Längsachse des gedachten Zylinders schräg verläuft. Sie bildet eine Antriebsfläche und wird deswegen im Weiteren als solche bezeichnet. Der Winkel der die Antriebsfläche 48 mit der Längsachse der Stufenbohrung 29 einschließt, entspricht dem Winkel, den die Antriebsflächen 38, 39 des keilförmigen Kopfes 35 mit der Längsachse der Stufenbohrung 29 einschließen. Dadurch liegen die Antriebsflächen 48 der beiden Spannbacken 5, 6 vollflächig an den Antriebsflächen 39 und 38 des Spannbolzens 3 an. Die Außenseite der Spannbacken 5, 6 weist mehrere in Umfangsrichtung verlaufende Rippen 49 auf, die dazu vorgesehen sind, beim Spannen geringfügig in das Material des Werkstücks einzudringen.

Unterhalb der Rippen 49 und oberhalb des Flansches 46 sind zwei Nuten 51 vorhanden, die der Aufnahme von zwei O-Ringen 52 dienen, die gleichzeitig als Rückstellmittel für die Spannbacken 5, 6 verwendet werden. Sie dichten obendrein ab. Die beiden O-Ringe 52 sind aus Übersichtlichkeitsgründen in Fig. 1 nicht dargestellt. In der Praxis sind sie dazu eingerichtet gegen die Umfangsfläche des Bohrungsabschnittes 30 abzudichten.

Der Flansch 46 bildet auf seiner Oberseite 53 einen Ausschnitt aus einer Kegelstumpffläche, deren Kegelwinkel zumindest angenähert dem Kegelwinkel der Schulterfläche 32 entspricht. Die Anordnung ist so getroffen, dass eine vollflächige Anlage der Schulterfläche 53 an der Schulterfläche 32 zustande kommt, wenn die Spannbacken 5, 6 voneinander soweit entfernt sind, dass die durch die Rippen 49 definierten Kreislinien dem Spannnenndurchmesser des Niederzugspanners 1 entsprechen.

Als Dimensionierungsvorschrift ist noch zu erwähnen, dass die zwischen den Antriebsflächen 38, 39 liegenden Seitenflächen 55 des keilförmigen Kopfes 35 Ausschnitte aus einer gemeinsamen Zylinderfläche sind, mit einem Durchmesser entsprechen dem Innendurchmesser der durch die Ringnut 51 definiert ist, wenn die beiden Spannbacken 5, 6 den kleinsten Abstand voneinander haben.

Schließlich ist noch eine Schraubendruckfeder 56 vorhanden, die, wie Fig. 1 zeigt gegen die Unterseite der Flansche 46 wirkt und die sich andererseits auf der Oberseite 12 des Gehäusegrundkörpers 7 neben dem Bohrungsabschnitt 16 abstützt. Sie sorgt dafür, dass in jedem Falle die Schulterflächen 53 mit der Schulterfläche 32 in Anlage bleiben.

Die Funktionsweise des gezeigten Niederzugspanners 1 ist wie folgt:

Fig. 1 zeigt den Ruhezustand des Niederzugspanners 1, in dem er bereit ist ein Werkstück aufzunehmen.

In der Grundstellung liegt der Kolben 4 auf der Oberseite 18 der Bodenplatte 9 auf. In diese Position wird er durch die Druckfeder 43 vorgespannt. Der mittlere Abschnitt 33 des Spannbolzens 3 steckt zum Teil in dem Bohrungsabschnitt 16. In dieser Position ist der keilförmige Kopf 35 soweit zurückgezogen, dass sein Ende 36 gegenüber der Oberseite der Spannbacken 5, 6 geringfügig zurückspringt. Er steht etwa im Bereich unterhalb der untersten Rippe 49, d.h. etwa auf der Mitte der Spannbacke 5, 6, gemessen ab dem oberen Ende der Schulterfläche 53. Die beiden Spannbacken 5, 6 haben ihren kleinsten Abstand voneinander. In dieser Stellung springen die Rippen 49 mit ihren Scheitellinien gegenüber der oben definierten Kreislinie des Nenndurchmessers zurück. Im Falle eines Niederzugspanners für einen Nenndurchmesser von ca. 8 mm beträgt der Rücksprung gegenüber dem Nennkreisdurchmesser wenige 0,1 mm.

Das Werkstück lässt sich mit seiner Spannbohrung ohne Weiteres auf die über die Werkstückauflagefläche 27 vorstehenden Teile der Spannbacken 5, 6 aufstecken. Nach dem Aufstecken wird der Raum unterhalb des Kolbens 4 mit einem Druckmedium, beispielsweise Hydraulikflüssigkeit oder Druckluft, beaufschlagt. Der Kolben 4 bewegt sich nach oben und lässt den keilförmigen Kopf 35 des Spannbolzens 3 tiefer zwischen die beiden Spannbacken 5, 6 eindringen. Zufolge der schräg verlaufenden Antriebsflächen 38, 39 und 48 entsteht eine Keilwirkung, die die beiden an den Antriebsflächen 38, 39 anliegenden Spannbacken 5, 6 voneinander weg drückt. Bezogen auf die Längsachse der Stufenbohrung 29 bewegen sich die beiden Spannbacken 5, 6 radial nach außen.

Da die beiden Spannbacken 5, 6 gleichzeitig mit ihren Schulterflächen 53 an der Schulterfläche 32 anliegen und diese Schulterfläche, wie gezeigt, geneigt ist, ist der tanslatorischen Radialbewegung nach außen eine translatorische Bewegung überlagert, die von oben her gegen die Werkstückauflagefläche 27 gerichtet ist, d.h. während der Radialbewegung nach außen bewegen sich die Rippen 49 gleichzeitig entsprechend dem Kegelwinkel der Schulterfläche 32 in Richtung auf die Werkstückauflagefläche 27.

Im Laufe der Vorschubbewegung bzw. Spreizbewegung der beiden Spannbacken 5, 6 werden diese mit der Wand der entsprechenden Spannbohrung im Werkstück in Eingriff kommen und sich gegen diese Wand anpressen. Während die Rippen 49 geringfügig in das Material eindringen oder auf der Wand der Spannbohrung entlang gleiten, wird in zunehmendem Maße das Werkstück gegen die Werkstückauflagefläche 27 angepresst.

Ersichtlicherweise bewegt sich der Spannbolzen 3 beim Spannen entgegen dem zu spanneden Werkstück und somit in eine Richtung, die an sich das Werkstück von der Werkstückauflagefläche 27 abheben würde. Zufolge der geneigt verlaufenen Schulterfläche 32 sowie der Schulterflächen 23 an den Flanschen 46 wird jedoch eine Ausschubbewegung oder Anhebebewegung der Spannbacken 5, 6 verhindert und statt dessen in die entgegengesetzte Richtung umgekehrt, die dafür sorgt, dass die Spannbacken 5, 6 tatsächlich gegenüber der Werkstückauflagefläche 27 in das Gehäuse 2 des Niederzugspanners 1 eintauchen und damit das Werkstück gegen die Werkstückauflagefläche 27 heranziehen.

Bei genauer Betrachtung gibt es exakt nur eine einzige Stellung, in der die Schulterflächen 53 vollflächig an der Schulterfläche 32 anliegen. Bei jeder anderen Stellung der Spannbacken 5, 6 zueinander kommt lediglich eine Linienberührung zustande. Dieser Unterschied oder wechselnde Anlageform hat für die praktische Anwendung keine Bedeutung. Er ist lediglich davon theoretischem Interesse und praktisch bedeutungslos.

Da die Antriebsflächen 38 und 39 des keilförmigen Kopfes 35 symmetrisch zu der Längsachse der Bohrung 29 ausgerichtet sind, stehen die beiden Spannbacken 5, 6 symmetrisch zu der Längsachse. Beim Spannen bewegen sie sich auch symmetrisch zu der Längsachse, betragsmäßig um die gleichen Werte radial nach außen und nach unten zu der Auflagefläche 27 hin. Der gedachte theoretische Spannmittelpunkt bleibt somit unabhängig davon, wie weit die beiden Spannbacken 5, 6 auseinander getrieben sind, erhalten.

Zum Ausgleich von Lagetoleranzen der Spannbohrung im Werkstück werden beim gezeigten Ausführungsbeispiel lediglich zwei Spannbacken 5, 6 verwendet, die im Rahmen der Elastizität des Systems und der jeweils vorhandenen Spiele geringfügig in Richtung parallel zu den Antriebsflächen 38, 39 und parallel zu der Werkstückauflagefläche 27 wandern können, um übermäßige Verspannungen im Werkstück zu vermeiden.

Wenn es auf diese Freiheit nicht ankommt, kann die Werkstückspanneinrichtung 1 auch mit drei oder mehr Spannbacken ausgerüstet werden.

Eine größere Anzahl von Spannbacken bietet sich beispielsweise an, wenn die Aufnahmebohrung Durchmesser über 20 mm aufweist. In diesem Falle ist es ferner zweckmäßig, anstelle eines keilförmigen Kopfes mit lediglich zwei Antriebsflächen 38, 39 entweder einen Kegelstumpf oder einen n-eckigen Pyramidenstumpf zu verwenden, wobei n der Anzahl der Spannbacken entspricht.

Wegen des geringen Hubs spielt es auch keine Rolle, wenn die an die Kegelstumpfform angepassten Antriebsflächen 48 der Spannbacken nur in einer Relativstellung satt an der Kegelstumpffläche anliegen.

Wenn das Werkstück nach der Bearbeitung entnommen werden soll, genügt es, wenn der Raum unterhalb des Kolbens 4 entlüftet wird. Die Schraubendruckfeder 43 drückt den Kolben 4 nach unten, so dass der keilförmige Kopf 35 zwischen den Spannbacken 5, 6 zurückgezogen wird. Die um sie herum liegenden O-Ringe 52 ziehen die Spannbacken 5, 6 aufeinander zu, wodurch der Außendurchmesser des durch sie gebildeten "Aufnahmedorns" entsprechend abnimmt. Gleichzeitig drückt die Schraubenfeder 56 die Spannbacken 5, 6 nach oben und hält sie in der Anlage an der kegelstumpfförmigen Schulter 32. Sobald die Endstellung gemäß Fig. 1 erreicht ist, kann das Werkstück abgenommen werden.

Die Gefahr des Eindringens von Spänen wird durch die O-Ringe 52 reduziert, da diese einerseits gegen den Bohrungsabschnitt 30 und andererseits gegen die Seitenflächen 55 des Kopfes 35 abdichten. Ein weiteres Hereinfallen von sehr kleinen Spänen kann beispielsweise auch verhindert werden, wenn im Falle der Verwendung von Druckluft ein Teil der Druckluft in die Stufenbohrung 29 eingeleitet wird, um Späne nach oben auszublasen bzw. ein Hereinfallen grundsätzlich zu verhindern.

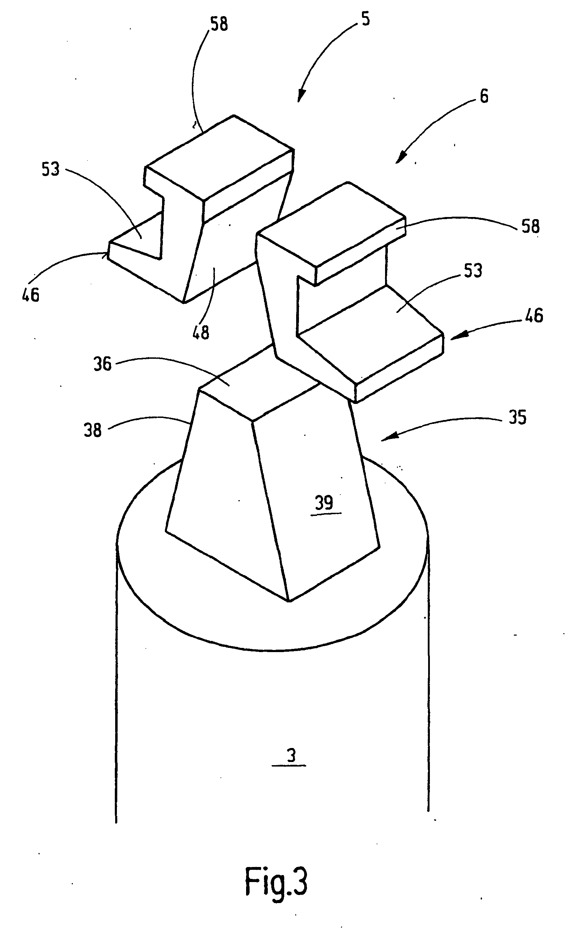

Das erfindungsgemäße Spannkonzept ist nicht auf zylindrische oder rotationssymmetrische Anwendungen beschränkt. Fig. 3 zeigt eine Ausgestaltung der Spannbacken, die nicht wie zuvor auf der Zylinderform sondern eher auf der Quaderform basieren. Der untere Flansch 46 ist bei dieser Ausführungsform nicht ein Ringsegment sondern eine Art Quader mit einer rechteckigen Unterseite und einer rechteckigen Oberseite 53, die, wie zuvor erwähnt, in der gleichen Weise geneigt ist wie die Oberseite 53 der Spannbacken 5, 6 nach Fig. 3.

Im Bereich des oberen freien Endes steht an jeder Spannbacke eine Leiste 58 vor, die in dieselbe Richtung zeiget wie der Flansch 56. Die Spannbacken 5, 6 bekommen im oberen Bereich von der Seite her gesehen die Gestalt eines Hakens. Beide Spannbacken 5, 6 zusammen, ergeben die Gestalt eines T-Nutensteins, der parallel zu den Leisten 58 gespalten ist.

Die Antriebsflächen 48 sind in der gleichen Weise ausgestaltet wie bei dem Ausführungsbeispiel zuvor.

Die Aufnahmeöffnung 29 ist an die geänderte Gestalt der Spannbacken angepasst, derart, dass sie nicht mehr rotationssymmetrisch ist sondern sich aus Abschnitten mit rechteckigem Querschnitt zusammensetzt. Die Schulterfläche 22 ist demgemäß eine schräge Ebene mit demselben Neigungswinkel gegenüber der Längsachse des Spannbolzens 3, den auch die Oberseite 53 des Flansches 46 aufweist.

Bei abgesenktem Spannbolzen 3 liegen die beiden Spannbacken 5, 6 im Bereich ihres oberen Endes, beispielsweise aneinander. Die freien voneinander weg zeigenden Längsseiten der beiden Leisten 58 haben voneinander einen Abstand, der der Schlitzweite einer T-Nut in einem aufzuspannenden Werkstück entspricht. Durch Vorschieben des Spannbolzens 3 zwischen die beiden Klemmbacken 5, 6 werden sie auseinander getrieben und gleichzeitig, wie zuvor ausführlich beschrieben, in Richtung auf die Werkstückauflagefläche niedergezogen. Beim Auseinanderdrücken greifen sie hinter die Schlitzränder in einer T-Nut in der gleichen Weise, wie dies dem Fachmann beim Zusammenwirken zwischen T-Nuten und T-Nutensteinen bekannt ist. Während des Eintreibens des Spannbolzens 3 zwischen die beiden Spannbacken 5, 6 erfolgt gleichzeitig eine Niederzugbewegung, die das Werkstück auf die Werkstückauflagefläche 27 niederzieht. Es versteht sich, dass das Zusammenwirken der Leisten 48 mit den hinterschnittenen Schlitzrändern erst zustande kommt, wenn die beiden Spannbacken 5, 6 weit genug auseinander getrieben sind, um eine hinreichende Überdeckung zwischen den Leisten 58 und den benachbarten Schlitzrändern der T-Nut zu erreichen.

Der Übersichtlichkeit halber sind die Rückholmittel nicht weiter veranschaulicht, die vorgesehen sind, um die Spannbacken aufeinander zu bewegen, wenn der Spanndorn mit seinem Kopf 35 aus dem keilförmigen Spalt zwischen den beiden Spannbacken 5, 6 zurückweicht.

Schließlich ist zu bemerken, dass der Niederzugspanner 1 in Verbindung mit einer Hydraulik- oder Druckluftanordnung als Antriebsmedium veranschaulicht ist. Der Fachmann sieht jedoch sogleich, dass der Spannbolzen 3 auch mit einem Schraubspindelantrieb versehen werden kann um elektromotorisch zwischen der Spannstellung und der Lösestellung hin und her bewegt werden zu können.

Eine Niederzugspanneinrichtung weist ein Gehäuse auf, in dem zwei oder mehr Spannbacken geführt sind. Durch besondere Maßnahmen wird dafür gesorgt, dass die Spannbacken bei ihrer Bewegung voneinander weg gleichzeitig eine Eintauchbewegung in das Gehäuse vornehmen. Hierdurch wird das Werkstück gegen die Werkstückauflagefläche angepresst. Die Bewegung der Spannbacken wird mit Hilfe eines Spannbolzens erzeugt, der mit seinem Kopf zwischen die Spannbacken gedrückt wird, wobei sich die Größe des Kopfes, ausgehend von der Mitte des Spannbolzens zum freien Ende hin verringert.

## Patentansprüche

1. Spanneinrichtung (1) zum Aufspannen von Werkstücken mit einem Gehäuse (2),
- das eine Stufenöffnung (29) mit wenigstens zwei in axialer Richtung hintereinander liegenden Abschnitten (30, 31) enthält, die eine nach innen ragende Schulterfläche (32) bilden, und
- das auf seiner Außenseite (25) eine bei der Stufenöffnung (29) liegende Werkstückauflagefläche (27) aufweist,
- wobei die Schulterfläche (32) derart schräg ausgerichtet ist, dass ihr radial innen liegender Rand näher bei einer durch die Werkstückauflagefläche (27) definierten Ebene liegt als der radial außen liegende Rand der Schulterfläche (32), der in den Abschnitt (31) mit der größeren Weite übergeht,
mit wenigstens zwei Spannbacken (5,6),
- die durch den Anschnitt (30) mit der geringeren Weite nach außen ragen,
- die die durch die Werkstückauflagefläche (27) definierte Ebene übertragen,
- von denen jede eine der Achse der Stufenöffnung (29) zugekehrte Antriebsfläche (48) aufweist und
- von denen jede an ihrem in der Stufenöffnung (29) liegenden Ende einen Flansch (46) aufweist, der gegen die Schulterfläche (32) anliegt,
- wobei die Flansche (46) Anlägeflächen (53) definierten, die zumindest angenähert unter demselben Winkel verlaufen wie die Schulterflächen (32) der Stufenöffnung (29), und
mit einem Spreizdorn (3), der einen Kopf (35) aufweist, der sich in Richtung auf das benachbarte freie Ende (36) verjüngt und mit den Antriebsflächen (48) der Spannbacken (5,6) zusammenwirkende Antriebsflächen (38,39) bildet, deren Abstand mit zunehmender Entfernung von dem freien Ende (36) zunimmt.

2. Spanneinrichtung nach Anspruch 1, **dadurch gekennzeichnet, dass** das Gehäuse (2) von einem Maschinentisch oder einem Werkstückaufspanntisch gebildet ist.

3. Spanneinrichtung nach Anspruch 1, **dadurch gekennzeichnet, dass** die Stufenöffnung (29) eine rotationssymmetrische Stufenbohrung ist.

4. Spanneinrichtung nach Anspruch 1, **dadurch gekennzeichnet, dass** der Abschnitt (30) mit der kleineren Weite eine Weite von wenigstens 5 mm aufweist.

5. Spanneinrichtung nach Anspruch 1, **dadurch gekennzeichnet, dass** die Schulterfläche (32) eine Kegelstumpffläche ist.

6. Spanneinrichtung nach Anspruch 1, dadurch gekennzeichnen, dass der Winkel, den die Schulterfläche mit der Längsachse der Stufenöffnung einschließt, zwischen 45° und 85°, vorzugsweise zwischen 60° und 70°, liegt.

7. Spanneinrichtung nach Anspruch 1, **dadurch gekennzeichnet, dass** lediglich zwei Spannbacken (5,6) vorgesehen sind.

8. Spanneinrichtung nach Anspruch 1, **dadurch gekennzeichnet, dass** mehr als zwei Spannbacken (5,6) vorgesehen sind.

9. Spanneinrichtung nach Anspruch 1, **dadurch gekennzeichnet, dass** die Spannbacken (5, 6) zylindrisch gekrümmte Spannflächen (45) aufweisen, die radial nach außen zeigen.

10. Spanneinrichtung nach Anspruch 1, **dadurch gekennzeichnet, dass** die Spannbacken (5,6) ebene Spannflächen bilden, die nach außen zeigen.

11. Spanneinrichtung nach Anspruch 1, dadurch gekennzeichnen, dass jede Spannbacke (5,6) an ihrem über die Werkstückauflagefläche (27) überstehenden Ende einen radial abstehenden Fortsatz (58) aufweist, derart, dass die Spannbacke (5,6) in der Seitenansicht eine Hakenform bekommt.

12. Spanneinrichtung nach Anspruch 1, **dadurch gekennzeichnet, dass** die Spannflächen (45) auf der durch den Werkstückanschlag (26) gebildeten Ebene senkrecht stehen oder dazu parallel verlaufen.

13. Spanneinrichtung nach Anspruch 1, **dadurch gekennzeichnet, dass** die Spannflächen (45) profiliert sind.

14. Spanneinrichtung nach Anspruch 1, dadurch gekennzeichnen, dass die Spannflächen (45) in Umfangsrichtung verlaufende Rippen (49) tragen.

15. Spanneinrichtung nach Anspruch 14, **dadurch gekennzeichnet, dass** die Rippen (49) in einer scharfkantigen Schneide auslaufen, die radial am weitesten außen liegt.

16. Spanneinrichtung nach Anspruch 1, **dadurch gekennzeichnet, dass** die Werkstückauflagefläche (26) eine Ebene definiert, die rechtwinklig zu der Längsachse der Stufenöffnung (29) verläuft.

17. Spanneinrichtung nach Anspruch 1, **dadurch gekennzeichnet, dass** die Werkstückauflagefläche (26) um die Stufenöffnung (29) herum verteilt angeordnet ist.

18. Spanneinrichtung nach Anspruch 1, **dadurch gekennzeichnet, dass** die Werkstückauflagefläche (26) eine durchgehende Fläche bildet, die sich um die Stufenöffnung (29) herum erstreckt.

19. Spanneinrichtung nach Anspruch 1, **dadurch gekennzeichnet, dass** das Gehäuse (2) ein im Wesentlichen zylindrisches Gehäuse ist mit einem Befestigungsflansch (9).

20. Spanneinrichtung nach Anspruch 1, **dadurch gekennzeichnet, dass** der Befestigungsflansch (9) in der Nähe der Werkstückauflagefläche angeordnet ist.

21. Spanneinrichtung nach Anspruch 1, **dadurch gekennzeichnet, dass** der Befestigungsflansch (9) an dem Gehäuse (2) an dem von der Werkstückauflagefläche (26) entfernten Ende vorgesehen ist.

22. Spanneinrichtung nach Anspruch 1, **dadurch gekennzeichnet, dass** die Spannbacken (5,6) gesintert sind.

23. Spanneinrichtung nach Anspruch 1, **dadurch gekennzeichnet, dass** die Antriebsfläche (48) einer jeden Spannbacke (5,6) ein Ausschnitt einer Kegelstumpffläche ist.

24. Spanneinrichtung nach Anspruch 1, **dadurch gekennzeichnet, dass** es eine Stellung der Spannbacken (5,6) gibt, in der die Anlageflächen (53) vollflächig an der Schulterfläche (32) der Stufenöffnung (29) anliegen.

25. Spanneinrichtung nach Anspruch 1, **dadurch gekennzeichnet, dass** die Anzahl der an dem Kopf (35) des Spreizdorns (3) ausgebildeten Antriebsflächen (38,39) mit der Anzahl der Spannbacken (5,6) übereinstimmt.

26. Spanneinrichtung nach Anspruch 1, **dadurch gekennzeichnet, dass** die Antriebsfläche (48) der Spannbacke (5,6) eine ebene Fläche ist.

27. Spanneinrichtung nach Anspruch 1, **dadurch gekennzeichnet, dass** die Antriebsfläche (48) der Spannbacke (5,6) eine rinnenförmige Gestalt aufweist.

28. Spanneinrichtung nach Anspruch 27, **dadurch gekennzeichnet, dass** die Rinne V-förmig ist.

29. Spanneinrichtung nach Anspruch 1, **dadurch gekennzeichnet, dass** der Winkel der Antriebsflächen (38,39) des Spreizdorns (3) mit der Längsachse der Stufenöffnung einen Winkel zwischen 5° und 30°, vorzugsweise zwischen 8° und 15°, einschließt.

30. Spanneinrichtung nach Anspruch 1, **dadurch gekennzeichnet, dass** die Stufenbohrung (29) abschnittsweise als Fluidzylinder (15) ausgebildet ist.

31. Spanneinrichtung nach Anspruch 30, **dadurch gekennzeichnet, dass** der Spreizdorn (3) mit einem in dem Fluidzylinder (15) verschieblichen Kolben (4) zusammenwirkt.

32. Spanneinrichtung nach Anspruch 1, **dadurch gekennzeichnet, dass** der Spreizdorn (3) mit einem Schraubspindelantrieb gekuppelt ist.

33. Spanneinrichtung nach Anspruch 1, **dadurch gekennzeichnet, dass** der Fluidzylinder (15) mit Druckluft beaufschlagt ist.

34. Spanneinrichtung nach Anspruch 1, **dadurch gekennzeichnet, dass** der Fluidzylinder (15) zweiseitig wirkend ausgebildet ist.

35. Spanneinrichtung nach Anspruch 1, **dadurch gekennzeichnet, dass** den Spannbacken (5,6) eine Rückholeinrichtung (52,56) zugeordnet ist.

36. Spanneinrichtung nach Anspruch 1, **dadurch gekennzeichnet, dass** die Rückholeinrichtung von wenigstens einem O-Ring (52) gebildet ist, der um sämtliche Spannbacken (5,6) außen herum liegt.

37. Spanneinrichtung nach Anspruch 1, **dadurch gekennzeichnet, dass** in denjenigen Raum, in dem sich die Flansche (46) der Spannbacken (5,6) befinden, eine Druckluftleitung mündet.

38. Spanneinrichtung nach Anspruch 1, **dadurch gekennzeichnet, dass** die Antriebsflächen (38,39) des Spreizdorns (3) auf die Antriebsflächen (48) der Spannbacken (5,6) derart abgestimmt sind, dass die Spannbacken (5,6) bei einer Bewegung des Spreizdorns (3) lediglich translatorische Bewegungen ausführen, die in zwei Komponenten zu zerlegen sind, von denen die eine Komponente senkrecht zu der durch die Werkstückauflagefläche (26) definierten Ebene liegt und die andere Bewegungskomponente parallel dazu, und dass keine Kipp- oder Drehbewegungen bei den Spannbacken (5,6) auftreten.

## Claims

1. Clamping device (1) for clamping workpieces with a housing (2),
- which contains a stepped opening (29) with at least two portions (30, 31), which are located one behind the other in the axial direction and form an inwardly projecting shoulder face (32), and
- which has, on its outside (25), a workpiece support face (27) located at the stepped opening (29),
- wherein the shoulder face (32) is oriented obliquely in such a way that its radially inwardly located edge is located closer to a plane defined by the workpiece support face (27) than the radially outwardly located edge of the shoulder face (32), which merges into the portion (31) with the larger width,
with at least two clamping jaws (5, 6),
- which project outwardly through the portion (30) with the smaller width,
- which project above the plane defined by the workpiece support face (27),
- of which each has a drive face (48) facing the axis of the stepped opening (29) and
- of which each, on its end located in the stepped opening (29), has a flange (46), which abuts the shoulder face (32),
- wherein the flanges (46) define contact faces (53), which run at least approximately at the same angle as the shoulder faces (32) of the stepped opening (29), and
with an expanding mandrel (3), which has a head (35), which tapers in the direction of the adjacent free end (36) and forms drive faces (38, 39) cooperating with the drive faces (48) of the clamping jaws (5, 6), the spacing of which increases with an increasing distance from the free end (36).

2. Clamping device according to claim 1, **characterised in that** the housing (2) is formed by a machine table or a workpiece clamping table.

3. Clamping device according to claim 1, **characterised in that** the stepped opening (29) is a rotationally symmetrical stepped bore.

4. Clamping device according to claim 1, **characterised in that** the portion (30) with the smaller width has a width of at least 5 mm.

5. Clamping device according to claim 1, **characterised in that** the shoulder face (32) is a truncated cone face.

6. Clamping device according to claim 1, **characterised in that** the angle, which the shoulder face forms with the longitudinal axis of the stepped opening, is between 45° and 85°, preferably between 60° and 70°.

7. Clamping device according to claim 1, **characterised in that** only two clamping jaws (5, 6) are provided.

8. Clamping device according to claim 1, **characterised in that** more than two clamping jaws (5, 6) are provided.

9. Clamping device according to claim 1, **characterised in that** the clamping jaws (5, 6) have cylindrically curved clamping faces (45), which are directed radially outwardly.

10. Clamping device according to claim 1, **characterised in that** the clamping jaws (5, 6) form flat clamping faces, which are directed outwardly.

11. Clamping device according to claim 1, **characterised in that** each clamping jaw (5, 6), at its end projecting beyond the workpiece support face (27), has a radially protruding extension (58), in such a way that the clamping jaw (5, 6) has a hook shape in the side view.

12. Clamping device according to claim 1, **characterised in that** the clamping faces (45) are perpendicular to the plane formed by the workpiece stop (26) or run parallel thereto.

13. Clamping device according to claim 1, **characterised in that** the clamping faces (45) are profiled.

14. Clamping device according to claim 1, **characterised in that** the clamping faces (45) carry ribs (49) running in the peripheral direction.

15. Clamping device according to claim 14, **characterised in that** the ribs (49) terminate in a sharp-edged blade, which is located radially furthest to the outside.

16. Clamping device according to claim 1, **characterised in that** the workpiece support face (26) defines a plane, which runs at right angles to the longitudinal axis of the stepped opening (29).

17. Clamping device according to claim 1, **characterised in that** the workpiece support face (26) is arranged distributed around the stepped opening (29).

18. Clamping device according to claim 1, **characterised in that** the workpiece support face (26) forms a continuous face, which extends around the stepped opening (29).

19. Clamping device according to claim 1, **characterised in that** the housing (2) is a substantially cylindrical housing with a fastening flange (9).

20. Clamping device according to claim 1, **characterised in that** the fastening flange (9) is arranged close to the workpiece support face.

21. Clamping device according to claim 1, **characterised in that** the fastening flange (9) is provided on the housing (2) on the end remote from the workpiece support face (26).

22. Clamping device according to claim 1, **characterised in that** the clamping jaws (5, 6) are sintered.

23. Clamping device according to claim 1, **characterised in that** the drive face (48) of each clamping jaw (5, 6) is a section of a truncated cone face.

24. Clamping device according to claim 1, **characterised in that** there is a position of the clamping jaws (5, 6), in which the contact faces (53) abut the entire surface on the shoulder face (32) of the stepped opening (29).

25. Clamping device according to claim 1, **characterised in that** the number of drive faces (38, 39) formed on the head (35) of the expanding mandrel (3) coincides with the number of clamping jaws (5, 6).

26. Clamping device according to claim 1, **characterised in that** the drive face (48) of the clamping jaw (5, 6) is a flat face.

27. Clamping device according to claim 1, **characterised in that** the drive face (48) of the clamping jaw (5, 6) has a groove configuration.

28. Clamping device according to claim 27, **characterised in that** the groove is V-shaped.

29. Clamping device according to claim 1, **characterised in that** the angle of the drive faces (38, 39) of the expanding mandrel (3) forms an angle between 5° and 30°, preferably between 8° and 15°, with the longitudinal axis of the stepped opening.

30. Clamping device according to claim 1, **characterised in that** the stepped bore (29) is configured, in portions, as a fluid cylinder (15).

31. Clamping device according to claim 30, **characterised in that** the expanding mandrel (3) cooperates with a piston (4) which is displaceable in the fluid cylinder (15).

32. Clamping device according to claim 1, **characterised in that** the expanding mandrel (3) is coupled to a screw spindle drive.

33. Clamping device according to claim 1, **characterised in that** the fluid cylinder (15) is pressurised with compressed air.

34. Clamping device according to claim 1, **characterised in that** the fluid cylinder (15) is configured to act on two sides.

35. Clamping device according to claim 1, **characterised in that** a restoring device (52, 56) is associated with the clamping jaws (5, 6).

36. Clamping device according to claim 1, **characterised in that** the restoring device is formed by at least one O-ring (52), which is located around the outside of all the clamping jaws (5, 6).

37. Clamping device according to claim 1, **characterised in that** a compressed air line opens into the space, in which the flanges (46) of the clamping jaws (5, 6) are located.

38. Clamping device according to claim 1, **characterised in that** the drive faces (38, 39) of the expanding mandrel (3) are matched to the drive faces (48) of the clamping jaws (5, 6) in such a way that the clamping jaws (5, 6) upon a movement of the expanding mandrel (3) carry out only translatory movements, which are to be split into two components, of which one component is perpendicular to the plane defined by the workpiece support face (26) and the other movement component is located parallel thereto, and **in that** no tilting or rotary movements occur in the clamping jaws (5, 6).

## Revendications

1. Dispositif de serrage (1) pour le serrage de pièces, comportant un carter (2),
- lequel présente une ouverture étagée (29) avec au moins deux sections (30, 31) disposées l'une derrière l'autre en direction axiale, qui forment une surface d'épaulement (32) s'enfonçant vers l'intérieur, et
- lequel présente sur sa face extérieure (25) une surface d'appui de pièce (27) située au niveau de l'ouverture étagée (29),
- la surface d'épaulement (32) étant inclinée de telle manière que son bord radialement intérieur est plus proche d'un plan défini par la surface d'appui de pièce (27) que le bord radialement extérieur de la surface d'épaulement (32), qui se continue dans la section (31) de grande largeur,
comportant au moins deux mâchoires de serrage (5, 6),
- lesquelles font saillie vers l'extérieur par la section (30) de petite largeur,
- dépassent du plan défini par la surface d'appui de pièce (27),
- chacune d'entre elles présentant une surface d'entraînement (48) opposée à l'axe de l'ouverture étagée (29), et
- chacune d'entre elles présentant une flasque (46) à leur extrémité située dans l'ouverture étagée (29), laquelle bute contre la surface d'épaulement (32),
- les flasques (46) définissant des surfaces de butée (53), qui s'étendent au moins sensiblement suivant le même angle que les surfaces d'épaulement (32) de l'ouverture étagée (29), et
comportant un mandrin expansible (3) pourvu d'une tête (35) qui se rétrécit en direction de l'extrémité libre (36) contiguë et qui forme des surfaces d'entraînement (38, 39) coopérant avec des surfaces d'entraînement (48) des mâchoires de serrage (5, 6), dont l'espacement entre elles s'accroît à mesure qu'elles s'éloignent de l'extrémité libre (36).

2. Dispositif de serrage selon la revendication 1, **caractérisé en ce que** le carter (2) est formé par une table de machine ou par une table de serrage de pièce.

3. Dispositif de serrage selon la revendication 1, **caractérisé en ce que** l'ouverture étagée (29) est un alésage étagé à symétrie de rotation.

4. Dispositif de serrage selon la revendication 1, **caractérisé en ce que** la section (30) de petite largeur est large d'au moins 5 mm.

5. Dispositif de serrage selon la revendication 1, **caractérisé en ce que** la surface d'épaulement (32) est une surface tronconique.

6. Dispositif de serrage selon la revendication 1, **caractérisé en ce que** l'angle formé par la surface d'épaulement et l'axe longitudinal de l'ouverture étagée est compris entre 45° et 85°, de préférence entre 60° et 70°.

7. Dispositif de serrage selon la revendication 1, **caractérisé en ce que** seules deux mâchoires de serrage (5, 6) sont prévues.

8. Dispositif de serrage selon la revendication 1, **caractérisé en ce que** plus de deux mâchoires de serrage (5, 6) sont prévues.

9. Dispositif de serrage selon la revendication 1, **caractérisé en ce que** les mâchoires de serrage (5, 6) présentent des surfaces de serrage (45) à incurvation cylindrique, dirigées radialement vers l'extérieur.

10. Dispositif de serrage selon la revendication 1, **caractérisé en ce que** les mâchoires de serrage (5, 6) forment des surfaces de serrage planes, dirigées vers l'extérieur.

11. Dispositif de serrage selon la revendication 1, **caractérisé en ce que** chaque mâchoire de serrage (5, 6) comporte un appendice (58) en saillie radiale à son extrémité dépassant de la surface d'appui de pièce (27), tel que la mâchoire de serrage (5, 6) présente une forme de crochet quand elle est vue de côté.

12. Dispositif de serrage selon la revendication 1, **caractérisé en ce que** les surfaces de serrage (45) se dressent verticalement sur le plan formé par la butée de pièce (26) ou s'étendent parallèlement à celui-ci.

13. Dispositif de serrage selon la revendication 1, **caractérisé en ce que** les surfaces de serrage (45) sont profilées.

14. Dispositif de serrage selon la revendication 1, **caractérisé en ce que** les surfaces de serrage (45) portent des ailettes (49) s'étendant en direction périphérique.

15. Dispositif de serrage selon la revendication 14, **caractérisé en ce que** les ailettes (49) se terminent par un bord à arête vive, le plus éloigné radialement vers l'extérieur.

16. Dispositif de serrage selon la revendication 1, **caractérisé en ce que** la surface d'appui de pièce (26) définit un plan qui s'étend perpendiculairement à l'axe longitudinal de l'ouverture étagée (29).

17. Dispositif de serrage selon la revendication 1, **caractérisé en ce que** la surface d'appui de pièce (26) est distribuée autour de l'ouverture étagée (29).

18. Dispositif de serrage selon la revendication 1, **caractérisé en ce que** la surface d'appui de pièce (26) forme une surface continue qui s'étend tout autour de l'ouverture étagée (29).

19. Dispositif de serrage selon la revendication 1, **caractérisé en ce que** le carter (2) est un carter sensiblement cylindrique avec une bride de fixation (9).

20. Dispositif de serrage selon la revendication 1, **caractérisé en ce que** la bride de fixation (9) est disposée à proximité de la surface d'appui de pièce.

21. Dispositif de serrage selon la revendication 1, **caractérisé en ce que** la bride de fixation (9) est prévue contre le carter (2), contre l'extrémité distante de la surface d'appui de pièce (26).

22. Dispositif de serrage selon la revendication 1, **caractérisé en ce que** les mâchoires de serrage (5, 6) sont frittées.

23. Dispositif de serrage selon la revendication 1, **caractérisé en ce que** la surface d'entraînement (48) de chaque mâchoire de serrage (5, 6) est une coupe d'une surface tronconique.

24. Dispositif de serrage selon la revendication 1, **caractérisé en ce qu'**il existe une position des mâchoires de serrage (5, 6) où les surfaces de butée (53) reposent intégralement contre la surface d'épaulement (32) de l'ouverture étagée (29).

25. Dispositif de serrage selon la revendication 1, **caractérisé en ce que** le nombre des surfaces d'entraînement (38, 39) formées sur la tête (35) du mandrin expansible (3) correspond au nombre de mâchoires de serrage (5, 6).

26. Dispositif de serrage selon la revendication 1, **caractérisé en ce que** la surface d'entraînement (48) de la mâchoire de serrage (5, 6) est une surface plane.

27. Dispositif de serrage selon la revendication 1, **caractérisé en ce que** la surface d'entraînement (48) de la mâchoire de serrage (5, 6) a une forme en gouttière.

28. Dispositif de serrage selon la revendication 27, **caractérisé en ce que** la gouttière est en forme de V.

29. Dispositif de serrage selon la revendication 1, **caractérisé en ce que** l'angle formé par les surfaces d'entraînement (38, 39) du mandrin expansible (3) et l'axe longitudinal de l'ouverture étagée est compris entre 5° et 30°, de préférence entre 8° et 15°.

30. Dispositif de serrage selon la revendication 1, **caractérisé en ce que** l'alésage étagé (29) est réalisé partiellement comme cylindre hydraulique (15).

31. Dispositif de serrage selon la revendication 30, **caractérisé en ce que** le mandrin expansible (3) coopère avec un piston (4) coulissant dans le cylindre hydraulique (15).

32. Dispositif de serrage selon la revendication 1, **caractérisé en ce que** le mandrin expansible (3) est accouplé à un entraînement par broche à vis.

33. Dispositif de serrage selon la revendication 1, **caractérisé en ce que** le cylindre hydraulique (15) est à commande pneumatique.

34. Dispositif de serrage selon la revendication 1, **caractérisé en ce que** le cylindre hydraulique (15) est réalisé avec une action bilatérale.

35. Dispositif de serrage selon la revendication 1, **caractérisé en ce qu'**un dispositif de rappel (52, 56) est affecté aux mâchoires de serrage (5, 6).

36. Dispositif de serrage selon la revendication 1, **caractérisé en ce que** le dispositif de rappel est constitué d'au moins un joint torique (52), qui entoure l'ensemble des mâchoires de serrage (5, 6).

37. Dispositif de serrage selon la revendication 1, **caractérisé en ce qu'**une conduite pneumatique débouche dans la chambre où se trouvent les flasques (46) des mâchoires de serrage (5, 6).

38. Dispositif de serrage selon la revendication 1, **caractérisé en ce que** les surfaces d'entraînement (38, 39) du mandrin expansible (3) sont ajustées aux surfaces d'entraînement (48) des mâchoires de serrage (5, 6), de telle manière qu'en cas de mouvement du mandrin expansible (3), les mâchoires de serrage (5, 6) n'exécuteront que des mouvements de translation décomposables en deux composantes, la première composante étant perpendiculaire au plan défini par la surface d'appui de pièce (26) et l'autre composante de mouvement étant parallèle à celui-ci, et **en ce que** les mâchoires de serrage (5, 6) ne subissent aucun mouvement de pivotement ou de rotation.
